# EUROPEAN PATENT SPECIFICATION

(11) **EP 3 308 683 B1**
(45) Date of publication and mention of the grant of the patent: **01.07.2020**
(21) Application number: 16193383.3
(22) Date of filing: 11.10.2016
(51) Int. Cl.: A47J 36/32, A47J 36/02

(54) **COOKING VESSEL FOR AN OVEN CAVITY OF A COOKING OVEN**
KOCHGEFÄSS FÜR EINEN OFENINNENRAUM EINES BACKOFENS
RECIPIENT DE CUISSON POUR LA CAVITE D'UN FOUR DE CUISSON

(43) Date of publication of application: 18.04.2018
(73) Proprietor: Electrolux Appliances Aktiebolag, 105 45 Stockholm (SE)
(72) Inventor: LUCKHARDT, Christoph, 91541 Rothenburg ob der Tauber (DE); REINHARD-HERRSCHER, Fabienne, 91541 Rothenburg ob der Tauber (DE)
(74) Representative: Electrolux Group Patents

(56) References cited:
- EP-A1- 0 651 962
- EP-A1- 1 577 653
- EP-A1- 3 056 882
- WO-A1-2010/049942
- WO-A1-2016/133010
- CH-A2- 709 520
- CN-A- 1 671 783
- DE-A1- 2 719 588
- JP-A- S53 101 144
- US-A- 4 576 842
- US-A- 5 558 798
- US-A1- 2005 285 735
- US-A1- 2009 057 318

## Description

The present invention relates to a cooking vessel for an oven cavity of a cooking oven according to the preamble of claim 1. Further, the present invention relates to a cooking oven with an oven cavity and at least one cooking vessel.

The cooking process in a casserole within an oven cavity has relative high energy consumption. The casserole is usually made of material having high heat capacity. Further, the control of the cooking process in the casserole is difficult.

DE 27 19 588 A1 discloses a cooking vessel for an oven cavity of a microwave oven. The cooking vessel comprises an upper part and a lower part forming a closed space. A temperature sensor is arranged in the lower part of the cooking vessel. The temperature sensor is connected to a control unit of the microwave oven via a wireless connection. The cooking vessel is made of a non-metallic material.

It is an object of the present invention to provide a cooking vessel for an oven cavity of a cooking oven, which allows reduced energy consumption and an improved control of the cooking process.

The object is achieved by the cooking vessel for an oven cavity of a cooking oven according to claim 1.

According to the present invention the upper part and the lower part are made of at least one temperature resistant polymer or plastic. The temperature sensor is connectable or connected to an oven socket via a cable, so that the temperature sensor can communicate with the control unit of the cooking oven. The lower part comprises a vessel socket for receiving a food probe including the temperature sensor, wherein said vessel socket is formed in the bottom of the lower part. The lower part comprises a vessel socket for receiving a food probe including the temperature sensor, wherein said vessel socket is formed in the bottom of the lower part or the lower part comprises a socket for receiving an electric plug of the cable, wherein said socket is connected to the temperature sensor and wherein the temperature sensor is permanently or detachably arranged in the bottom of the lower part.

The core of the present invention is that the cooking vessel is made of the temperature resistant polymer or plastic, preferentially of at least one of the liquid crystal polymer, polyether ether ketone and/or polyetherimide, on the one hand and the arrangement of the temperature sensor in said cooking vessel on the other hand, wherein the temperature sensor is connectable or connected to the control unit of the cooking oven. The cooking process in the cooking vessel can be directly controlled.

The temperature sensor is connectable or connected to an oven socket via a cable, so that the temperature sensor can communicate with the control unit of the cooking oven.

The lower part comprises a vessel socket for receiving a food probe including the temperature sensor, wherein said vessel socket is formed in the bottom of the lower part.

The lower part comprises a socket for receiving an electric plug of the cable, wherein said socket is connected to the temperature sensor, and wherein the temperature sensor is permanently or detachably arranged in the bottom of the lower part.

According to an embodiment not covered by the present claims, the lower part is hard-wired with the cable, wherein preferably the cable includes a plug connectable to the oven socket of the cooking oven.

According to another alternative embodiment, the temperature sensor is connectable or connected to the control unit of the cooking oven via a wireless connection, for example an SAW or RFID connection.

For example, the upper part and the lower part include a planar contact surface in each case, so that the upper part and the lower part are tightly closable together by gravity, wherein preferably the upper part and/or the lower part include a rim, which prevents the upper part from getting out of place.

Alternatively, the upper part and the lower part may include an interlocking system, wherein preferably at least one sealing is arrangeable or arranged between the upper part and the lower part.

For example, the upper part and the lower part include a bayonet closing system between said upper part and lower part.

According to another example, the upper part and the lower part are connectable or connected by ate least one clamp and/or hinge.

Further, the cooking vessel may include at least one automatic and/or manual pressure release system, wherein preferably said pressure release system limits the pressure inside the cooking vessel.

Moreover, the cooking vessel may include at least one lockable opening for controlling the loss of moisture in the cooking vessel, wherein preferably said lockable opening is a rotatable slider or a linearly movable slider.

Preferably, the cooking vessel comprises at least one ventilation opening including the lockable opening and the pressure release system mentioned above.

Further, the present invention relates to a cooking oven with an oven cavity and at least one cooking vessel mentioned above, wherein
- the oven cavity is provided for receiving the cooking vessel,
- the cooking oven includes at least one oven socket for receiving a plug of the cable connected or connectable to the at least one temperature sensor of the cooking vessel, and
- the oven socket is connected to the control unit of the cooking oven.

At last, the present invention relates to an alternative cooking oven with the oven cavity and at least one cooking vessel mentioned above, wherein
- the oven cavity is provided for receiving the cooking vessel,
- the cooking oven includes means for at least one wireless connection to the at least one temperature sensor of the cooking vessel, and
- the means for the wireless connection are connected to the control unit of the cooking oven.

Novel and inventive features of the present invention are set forth in the appended claims.

The present invention will be described in further detail with reference to the drawings, in which
- FIG 1: illustrates a schematic front view of a cooking oven with a cooking vessel according to a preferred embodiment of the present invention,
- FIG 2: illustrates a schematic front view of the cooking vessel according to the preferred embodiment of the present invention,
- FIG 3: illustrates a schematic front view of the cooking vessel according to the preferred embodiment of the present invention, and
- FIG 4: illustrates a schematic top view of a ventilation opening of the cooking vessel according to the preferred embodiment of the present invention.

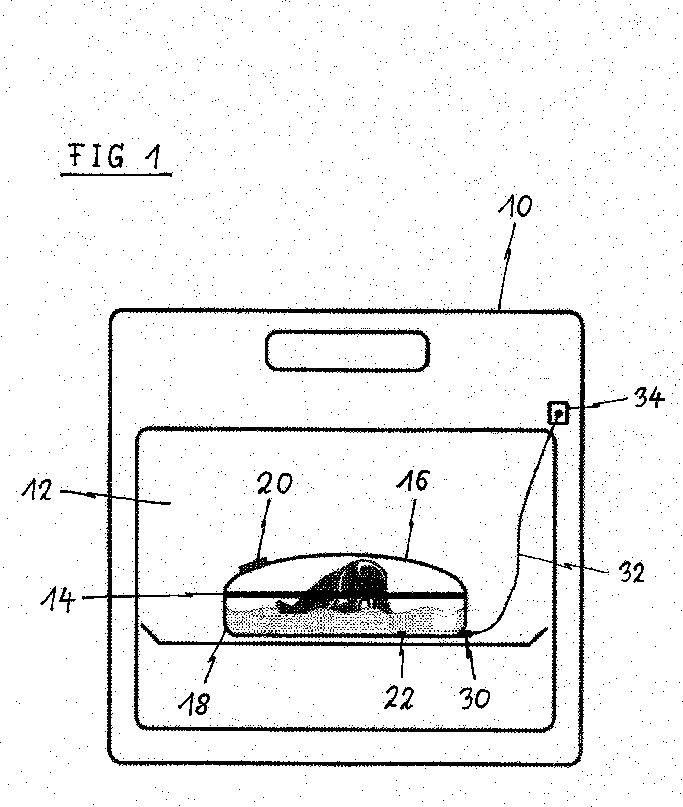

FIG 1 illustrates a schematic front view of a cooking oven 10 with a cooking vessel 14 according to a preferred embodiment of the present invention. The cooking vessel 14 is arranged inside an oven cavity 12 of the cooking oven 10.

The cooking vessel 14 includes an upper part 16 and a lower part 18. The upper part 16 and the lower part 18 form the closed cooking vessel 14. In this example, the lower part 18 is a casserole, while the upper part 16 is a lid. The cooking vessel 14 includes a temperature sensor 22. In this example, the temperature sensor 22 is arranged in the bottom of the lower part 18. Preferably, the temperature sensor 22 is an NTC resistor element. The temperature sensor 22 is a part of a food probe 30 received by a vessel socket 28 in the bottom of the lower part 18.

The food probe 30 with temperature sensor 22 is connected to an oven socket 34 of the cooking oven 10 via a cable 32.

In this example, the upper part 16 and the lower part 18 include a planar contact surface in each case. Said planar contact surfaces allow a tight closing between the upper part 16 and the lower part 18 by gravity. Preferably, the upper part 16 and/or the lower part 18 include a rim, which prevents the upper part 16 from getting out of place. Alternatively, the upper part 16 and the lower part 18 include an interlocking system, for example a bayonet closing system, clamps and/or hinges, wherein preferably a sealing is arranged between the upper part 16 and the lower part 18.

Further, the cooking vessel 14 comprises a ventilation opening 20 arranged in a top side of the upper part 16. Said ventilation opening 20 is optional, if the upper part 16 and the lower part 18 include the planar contact surfaces. However, the ventilation opening 20 is necessary or at least advantageous, if the upper part 16 and the lower part 18 include the interlocking system.

The cooking vessel 14 is made of at least one temperature resistant polymer or plastic, for example of at least one of Liquid crystal polymer (LCP), polyether ether ketone (PEEK) and/or polyetherimide (PEI). Said polymer or plastic has a low heat capacity. More accurately, the heat capacity per volume of the polymer is low. The material of the cooking vessel 14 is food safe. The material of the cooking vessel 14 has an emissivity of at least 0.8, preferably bigger than about 0.8, which is a low value and contributes to low energy consumption. In particular, the emissivity can be between selected from the range of 0.8 to 1.

The cooking vessel 14 is provided for different sizes. For example, the volume of the cooking vessel 14 is one, two three, five or seven litre.

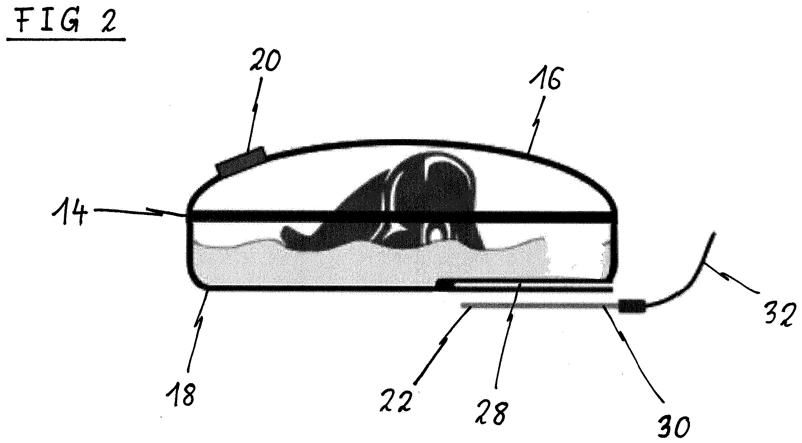

FIG 2 illustrates a schematic front view of the cooking vessel 14 according to the preferred embodiment of the present invention. The upper part 16 and the lower part 18 form the closed cooking vessel 14.

A vessel socket 28 is integrated in the bottom of the lower part 18. The vessel socket 28 is provided for receiving the food probe 30 with the temperature sensor 22. In FIG 2 the food probe 30 is outside of the vessel socket 28. The food probe 30 is connectable via the cable 32 to the oven socket 34 of the cooking oven 10, so that the temperature sensor 22 is connectable to a control unit of the cooking oven 10. The cable 32 is connectable to the oven socket 34 via a plug. For example, the plug for the oven socket 34 is a 3.5 mm or 6.35 mm phone jack.

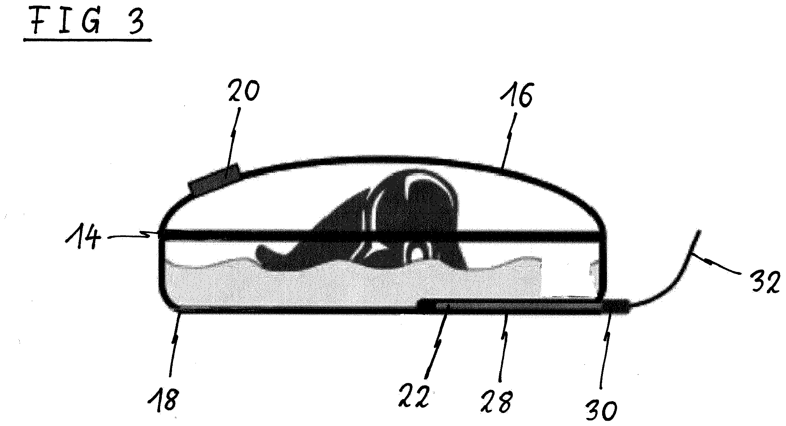

FIG 3 illustrates a schematic front view of the cooking vessel 14 according to the preferred embodiment of the present invention. In FIG 3 the food probe 30 is inserted in the vessel socket 28.

According to the invention, the lower part 18 includes a socket for a phone jack or the like in order to connect the cooking vessel 14 to the control unit of the cooking oven 10. In this case, the temperature sensor 22 is permanently or detachably arranged in the bottom of the lower part 18 and electrically connected to the socket.

According to an embodiment not covered by the claims, the lower part 18 is hard-wired with the cable 32. In this case, the cable 32 may include a plug, e.g. a jack phone, connectable to the oven socket 34 of the cooking oven 10.

Alternatively, the food probe 30 with the temperature sensor 22 is connectable to the control unit of the cooking oven 10 via a wireless connection, for example SAW, RFID or the like. If the cooking oven 10 is equipped with a camera, then an analogue temperature gauge is possible. Said temperature gauge may be monitored via camera and application software.

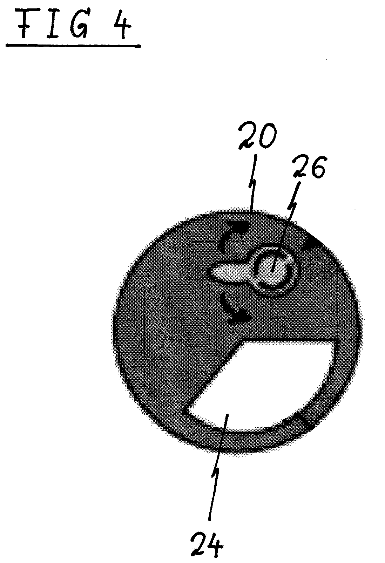

FIG 4 illustrates a schematic top view of the ventilation opening 20 of the cooking vessel 14 according to the preferred embodiment of the present invention. The ventilation opening 20 is optional, if the upper part 16 and the lower part 18 include the planar contact surfaces. In contrast, the ventilation opening 20 is necessary or at least advantageous, if the upper part 16 and the lower part 18 include the bayonet closing system, the clamps and/or the hinges.

The ventilation opening 20 comprises a rotatable slider 24 and a pressure release system 26. Instead of the rotatable slider 24 the ventilation opening 20 may comprise a linearly movable slider. The rotatable slider 24 allows different opening widths. The rotatable slider 24 controls the loss of moisture in the cooking vessel 14 during the cooking process. The pressure release system 26 allows an automatic and/or manual reduction of an overpressure inside the closed cooking vessel 14. Moreover, the pressure inside the cooking vessel 14 can be reduced to ambient pressure after the cooking process.

The present invention provides a light weight cooking vessel 14 with a low heat capacity. The tight closing of the upper part 16 and the lower part 18 prevents the food from moisture loss. The interlocking system for the upper part 16 and the lower part 18 allows pressure cooking modes. The pressure release system 26 of the ventilation opening 20 allows the automatic limitation of the pressure inside the cooking vessel 14. The rotatable slider 24 of the ventilation opening 20 allows the possibility to get rid of moisture, if the cooking recipe requires this.

The integrated temperature sensor 22 allows an automatic and/or manual control of the cooking process. The temperature control during pressure cooking prevents a continuous pressure release. Using application software and the temperature sensor 22 the user can monitor the cooking process in an easy way. Food usually cooked in a pot on a cooking hob may be prepared in the cooking vessel 14 inside the oven cavity 12 in a shorter time.

By the temperature control in the cooking vessel 14 vitamins and nutrients may be kept and energy is saved. Further, temperature dependent cooking processes like enzymatic degradation of collagen, hydrolysing of collagen, swelling of starch or denaturation of protein are supported by the temperature control in the cooking vessel 14. Moreover, the temperature control in the cooking vessel 14 allows the determination of the amount of food without scale.

Although an illustrative embodiment of the present invention has been described herein with reference to the accompanying drawings, it is to be understood that the present invention is not limited to that precise embodiment, and that various other changes and modifications may be affected therein by one skilled in the art without departing from the scope of the invention. All such changes and modifications are intended to be included within the scope of the invention as defined by the appended claims.

### List of reference numerals

- 10: cooking oven
- 12: oven cavity
- 14: cooking vessel
- 16: upper part
- 18: lower part
- 20: ventilation opening
- 22: temperature sensor
- 24: rotatable slider
- 26: pressure release system
- 28: vessel socket
- 30: food probe
- 32: cable
- 34: oven socket

## Claims

1. A cooking vessel (14) for an oven cavity (12) of a cooking oven (10), wherein:
- the cooking vessel (14) includes an upper part (16) and a lower part (18),
- the cooking vessel (14) provides a closed space, when the upper part (16) covers the lower part (18),
- at least one temperature sensor (22) is removably or permanently arranged in the bottom of the lower part (18), and
- the temperature sensor (22) is connectable or connected to a control unit of the cooking oven (10),
**characterised in that**
the upper part (16) and the lower part (18) are made of at least one temperature resistant polymer or plastic further **characterised in that**
the temperature sensor (22) is connectable or connected to an oven socket (34) via a cable (32), so that the temperature sensor (22) can communicate with the control unit of the cooking oven (10),
the lower part (18) comprises a vessel socket (28) for receiving a food probe (30) including the temperature sensor (22), wherein said vessel socket (28) is formed in the bottom of the lower part (18), or
the lower part (18) comprises a socket for receiving an electric plug of the cable (32), wherein said socket is connected to the temperature sensor (22), and wherein the temperature sensor (22) is permanently or detachably arranged in the bottom of the lower part (18).

2. The cooking vessel according claim 1,
**characterised in that**
the temperature sensor (22) is connectable or connected to the control unit of the cooking oven (10) via a wireless connection, for example an SAW or RFID connection.

3. The cooking vessel according to any one of the preceding claims,
**characterised in that**
the upper part (16) and the lower part (18) include a planar contact surface in each case, so that the upper part (16) and the lower part (18) are tightly closable together by gravity, wherein preferably the upper part (16) and/or the lower part (18) include a rim, which prevents the upper part (16) from getting out of place.

4. The cooking vessel according to any one of the claims 1 to 2,
**characterised in that**
the upper part (16) and the lower part (18) include an interlocking system, wherein preferably at least one sealing is arrangeable or arranged between the upper part (16) and the lower part (18).

5. The cooking vessel according to claim 4,
**characterised in that**
the upper part (16) and the lower part (18) include a bayonet closing system between said upper part (16) and lower part (18).

6. The cooking vessel according to claim 4,
**characterised in that**
the upper part (16) and the lower part (18) are connectable or connected by ate least one clamp and/or hinge.

7. The cooking vessel according to any one of the preceding claims,
**characterised in that**
the cooking vessel (14) includes at least one automatic and/or manual pressure release system (26), wherein preferably said pressure release system (26) limits the pressure inside the cooking vessel (14).

8. The cooking vessel according to any one of the preceding claims,
**characterised in that**
the cooking vessel (14) includes at least one lockable opening (24) for controlling the loss of moisture in the cooking vessel (14), wherein preferably said lockable opening (24) is a rotatable slider (24) or a linearly movable slider.

9. The cooking vessel according to claim 7 and 8,
**characterised in that**
the cooking vessel (14) comprises at least one ventilation opening (20) including the lockable opening (24) and the pressure release system (26).

10. A cooking oven (10) with an oven cavity (12) and at least one cooking vessel (14) according to any one of the preceding claims,
**characterised in that**
- the oven cavity (12) is provided for receiving the cooking vessel (14),
- the cooking oven (10) includes at least one oven socket (34) for receiving a plug of the cable (32) connected or connectable to the at least one temperature sensor (22) of the cooking vessel (14), and
- the oven socket (34) is connected to the control unit of the cooking oven (10).

11. A cooking oven (10) with an oven cavity (12) and at least one cooking vessel (14) according to any one of the preceding claims 1 to 9,
**characterised in that**
- the oven cavity (12) is provided for receiving the cooking vessel (14),
- the cooking oven (10) includes means for at least one wireless connection to the at least one temperature sensor (22) of the cooking vessel (14), and
- the means for the wireless connection are connected to the control unit of the cooking oven (10).

## Patentansprüche

1. Kochgefäß (14) für einen Ofeninnenraum (12) eines Backofens (10), wobei:
- das Kochgefäß (14) einen oberen Teil (16) und einen unteren Teil (18) beinhaltet,
- das Kochgefäß (14) einen geschlossenen Raum bereitstellt, wenn der obere Teil (16) den unteren Teil (18) bedeckt,
- mindestens ein Temperatursensor (22) abnehmbar oder dauerhaft im Boden des unteren Teils (18) angeordnet ist, und
- der Temperatursensor (22) mit einer Steuereinheit des Backofens (10) verbunden werden kann oder damit verbunden ist,
**dadurch gekennzeichnet, dass**
der obere Teil (16) und der untere Teil (18) aus mindestens einem temperaturbeständigen Polymer oder Kunststoff hergestellt sind,
ferner **dadurch gekennzeichnet, dass**
der Temperatursensor (22) über ein Kabel (32) mit einer Ofenbuchse (34) verbunden werden kann oder damit verbunden ist, so dass der Temperatursensor (22) mit der Steuereinheit des Backofens (10) kommunizieren kann, der untere Teil (18) eine Gefäßaufnahme (28) zur Aufnahme einer Lebensmittelsonde (30) einschließlich des Temperatursensors (22) umfasst, wobei die Gefäßaufnahme (28) im Boden des unteren Teils (18) ausgebildet ist, oder
der untere Teil (18) eine Buchse zur Aufnahme eines elektrischen Steckers des Kabels (32) umfasst, wobei die Buchse mit dem Temperatursensor (22) verbunden ist, und wobei der Temperatursensor (22) dauerhaft oder abnehmbar im Boden des unteren Teils (18) angeordnet ist.

2. Kochgefäß nach Anspruch 1,
**dadurch gekennzeichnet, dass**
der Temperatursensor (22) mit der Steuereinheit des Backofens (10) über eine drahtlose Verbindung, zum Beispiel eine SAW- oder RFID-Verbindung, verbunden werden kann oder damit verbunden ist.

3. Kochgefäß nach einem der vorhergehenden Ansprüche,
**dadurch gekennzeichnet, dass**
der obere Teil (16) und der untere Teil (18) jeweils eine ebene Kontaktfläche beinhalten, so dass der obere Teil (16) und der untere Teil (18) durch Schwerkraft dicht miteinander verschließbar sind, wobei vorzugsweise der obere Teil (16) und/oder der untere Teil (18) einen Rand beinhalten, der ein Verrutschen des oberen Teils (16) verhindert.

4. Kochgefäß nach einem der Ansprüche 1 bis 2,
**dadurch gekennzeichnet, dass**
der obere Teil (16) und der untere Teil (18) ein Verriegelungssystem beinhalten, wobei vorzugsweise mindestens eine Dichtung zwischen dem oberen Teil (16) und dem unteren Teil (18) angeordnet werden kann oder angeordnet ist.

5. Kochgefäß nach Anspruch 4,
**dadurch gekennzeichnet, dass**
der obere Teil (16) und der untere Teil (18) ein Bajonettverschlusssystem zwischen dem oberen Teil (16) und dem unteren Teil (18) beinhalten.

6. Kochgefäß nach Anspruch 4, **dadurch gekennzeichnet, dass**
der obere Teil (16) und der untere Teil (18) durch mindestens eine Klammer und/oder ein Scharnier miteinander verbunden werden können oder verbunden sind.

7. Kochgefäß nach einem der vorhergehenden Ansprüche,
**dadurch gekennzeichnet, dass**
das Kochgefäß (14) mindestens ein automatisches und/oder manuelles Druckentlastungssystem (26) beinhaltet, wobei vorzugsweise das Druckentlastungssystem (26) den Druck im Inneren des Kochgefäßes (14) begrenzt.

8. Kochgefäß nach einem der vorhergehenden Ansprüche,
**dadurch gekennzeichnet, dass**
das Kochgefäß (14) mindestens eine verriegelbare Öffnung (24) zum Steuern des Feuchtigkeitsverlustes im Kochgefäß (14) beinhaltet, wobei vorzugsweise die verriegelbare Öffnung (24) ein drehbarer Schieber (24) oder ein linear beweglicher Schieber ist.

9. Kochgefäß nach Anspruch 7 und 8,
**dadurch gekennzeichnet, dass**
das Kochgefäß (14) mindestens eine Entlüftungsöffnung (20) umfasst, die die verriegelbare Öffnung (24) und das Druckentlastungssystem (26) beinhaltet.

10. Backofen (10) mit einem Ofeninnenraum (12) und mindestens einem Kochgefäß (14) nach einem der vorhergehenden Ansprüche,
**dadurch gekennzeichnet, dass**
- der Ofeninnenraum (12) zur Aufnahme des Kochgefäßes (14) vorgesehen ist,
- der Backofen (10) mindestens eine Ofenbuchse (34) zur Aufnahme eines Steckers des Kabels (32) beinhaltet, das mit dem mindestens einen Temperatursensor (22) des Kochgefäßes (14) verbunden ist oder damit verbunden werden kann, und
- die Ofenbuchse (34) mit der Steuereinheit des Backofens (10) verbunden ist.

11. Backofen (10) mit einem Ofeninnenraum (12) und mindestens einem Kochgefäß (14) nach einem der vorhergehenden Ansprüche 1 bis 9,
**dadurch gekennzeichnet, dass**
- der Ofeninnenraum (12) zur Aufnahme des Kochgefäßes (14) vorgesehen ist,
- der Backofen (10) Mittel für mindestens eine drahtlose Verbindung zum mindestens einen Temperatursensor (22) des Kochgefäßes (14) beinhaltet, und
- die Mittel für die drahtlose Verbindung mit der Steuereinheit des Backofens (10) verbunden sind.

## Revendications

1. Récipient de cuisson (14) pour une cavité de four (12) d'un four de cuisson (10), dans lequel :
- le récipient de cuisson (14) comporte une partie supérieure (16) et une partie inférieure (18),
- le récipient de cuisson (14) fournit un espace fermé quand la partie supérieure (16) recouvre la partie inférieure (18),
- au moins un capteur de température (22) est disposé de façon amovible ou permanente dans le fond de la partie inférieure (18), et
- le capteur de température (22) est connectable ou connecté à une unité de commande du four de cuisson (10),
**caractérisé en ce que**
la partie supérieure (16) et la partie inférieure (18) sont constituées d'au moins un polymère ou plastique thermorésistant,
**caractérisé en outre en ce que**
le capteur de température (22) est connectable ou connecté à une prise de four (34) par le biais d'un câble (32), de telle sorte que le capteur de température (22) peut communiquer avec l'unité de commande du four de cuisson (10),
la partie inférieure (18) comprend une prise de récipient (28) destinée à recevoir une sonde pour aliments (30) comportant le capteur de température (22), ladite prise de récipient (28) étant formée dans le fond de la partie inférieure (18), ou
la partie inférieure (18) comprend une prise destinée à recevoir une fiche électrique du câble (32), ladite prise étant connectée au capteur de température (22), et le capteur de température (22) étant disposé de façon permanente ou détachable dans le fond de la partie inférieure (18).

2. Récipient de cuisson selon la revendication 1,
**caractérisé en ce que**
le capteur de température (22) est connectable ou connecté à l'unité de commande du four de cuisson (10) par le biais d'une connexion sans fil, par exemple une connexion SAW ou RFID.

3. Récipient de cuisson selon l'une quelconque des revendications précédentes,
**caractérisé en ce que**
la partie supérieure (16) et la partie inférieure (18) comportent une surface de contact plane dans chaque cas, de telle sorte que la partie supérieure (16) et la partie inférieure (18) ensemble sont fermables hermétiquement par gravité, la partie supérieure (16) et/ou la partie inférieure (18) comportant de préférence un bord qui empêche la partie supérieure (16) de bouger.

4. Récipient de cuisson selon l'une quelconque des revendications 1 à 2,
**caractérisé en ce que**
la partie supérieure (16) et la partie inférieure (18) comportent un système d'enclenchement, au moins un dispositif d'étanchéité étant de préférence disposable ou disposé entre la partie supérieure (16) et la partie inférieure (18).

5. Récipient de cuisson selon la revendication 4,
**caractérisé en ce que**
la partie supérieure (16) et la partie inférieure (18) comportent un système de fermeture à baïonnette entre lesdites partie supérieure (16) et partie inférieure (18).

6. Récipient de cuisson selon la revendication 4,
**caractérisé en ce que**
la partie supérieure (16) et la partie inférieure (18) sont raccordables ou raccordées par au moins une bride et/ou charnière.

7. Récipient de cuisson selon l'une quelconque des revendications précédentes,
**caractérisé en ce que**
le récipient de cuisson (14) comporte au moins un système de décharge de pression automatique et/ou manuelle (26), ledit système de décharge de pression (26) limitant de préférence la pression à l'intérieur du récipient de cuisson (14).

8. Récipient de cuisson selon l'une quelconque des revendications précédentes,
**caractérisé en ce que**
le récipient de cuisson (14) comporte au moins une ouverture verrouillable (24) destinée à contrôler la perte d'humidité dans le récipient de cuisson (14), ladite ouverture verrouillable (24) étant de préférence un coulisseau rotatif (24) ou un coulisseau mobile linéairement.

9. Récipient de cuisson selon les revendications 7 et 8,
**caractérisé en ce que**
le récipient de cuisson (14) comprend au moins une ouverture de ventilation (20) comportant l'ouverture verrouillable (24) et le système de décharge de pression (26) .

10. Four de cuisson (10) avec une cavité de four (12) et au moins un récipient de cuisson (14) selon l'une quelconque des revendications précédentes,
**caractérisé en ce que**
- la cavité de four (12) est prévue pour recevoir le récipient de cuisson (14),
- le four de cuisson (10) comporte au moins une prise de four (34) destinée à recevoir une fiche du câble (32) connecté ou connectable à l'au moins un capteur de température (22) du récipient de cuisson (14), et
- la prise de four (34) est connectée à l'unité de commande du four de cuisson (10).

11. Four de cuisson (10) avec une cavité de four (12) et au moins un récipient de cuisson (14) selon l'une quelconque des revendications 1 à 9,
**caractérisé en ce que**
- la cavité de four (12) est prévue pour recevoir le récipient de cuisson (14),
- le four de cuisson (10) comporte des moyens pour au moins une connexion sans fil avec l'au moins un capteur de température (22) du récipient de cuisson (14), et
- les moyens de connexion sans fil sont connectés à l'unité de commande du four de cuisson (10).
